# EUROPÄISCHE PATENTANMELDUNG

(11) **EP 3 345 797 A1**
(43) Veröffentlichungstag der Anmeldung: **11.07.2018**
(21) Anmeldenummer: 18157518.4
(22) Anmeldetag: 20.09.2011
(51) Int. Cl.: B60T 8/1761

(54) **FAHRZEUG MIT ANTIBLOCKIERSYSTEM UND VERFAHREN ZUM ABBREMSEN EINES FAHRZEUGS**

(62) Teilanmeldung aus: 11181972.8
(71) Anmelder: Lucas Automotive GmbH, 56070 Koblenz (DE)
(72) Erfinder: BERGMANN, Dominik, 83679 Sachsenkam (DE); FIEGE, Ludger Dr., 85567 Grafing (DE); FREITAG, Gunter Dr., 81735 München (DE); GERLICH, Matthias, 80636 München (DE); GRIESER-SCHMITZ, Stefan, 56070 Koblenz (DE); LANZE, Eugen, 56182 Urbar (DE); ROBISON, Ries, Canton, MI 48187 (US)
(74) Vertreter: Röthinger, Rainer

(57) **Zusammenfassung**

Um beim Abbremsen eines Fahrzeugs einen möglichst günstigen Schlupf eines Rades (10) des Fahrzeugs bezüglich einer Fahrbahn (12) zu erhalten, kann vorgesehen sein, die Drehzahl (w) des Rades (10) durch ein ABS aktiv über einen Bremseingiff zu vermindern und passiv bei gelöster Bremse über die Fahrbahn (12) wieder beschleunigen zu lassen. Während der ABS-Regelung pendelt der Schlupf des Rades (10) dabei um einen optimalen Schlupfwert. Es ist Aufgabe der vorliegenden Erfindung, ein Antiblockiersystem für ein Fahrzeug zu verbessern. Bei dem erfindungsgemäßen Verfahren wird zum Verringern einer Fahrgeschwindigkeit (v) des Fahrzeugs bezüglich einer Rollfläche (12) zeitweise wenigstens ein Rad (10) des Fahrzeugs mit einem Bremsmoment (Mb) beaufschlagt, welches entgegen einer Drehrichtung (14) des Rades (10) wirkt. Zusätzlich ist vorgesehen, während des Verringerns der Fahrgeschwindigkeit (v) das Rad (10) zeitweise mittels einer fahrzeugeigenen Beschleunigungseinrichtung mit einem Beschleunigungsmoment (Ma) zu beaufschlagen, welches in die Drehrichtung (14) wirkt.

## Beschreibung

Die Erfindung betrifft ein Fahrzeug mit einer Bremseinrichtung zum Abbremsen des Fahrzeugs. Mittels der Bremseinrichtung kann wenigstens ein Rad des Fahrzeugs mit einem Bremsmoment beaufschlagt werden. Die Erfindung betrifft auch ein Verfahren zum Abbremsen des Fahrzeugs. Mittels des Verfahrens wird eine Fahrgeschwindigkeit des Fahrzeugs verringert, mit welcher es mit dem wenigstens einen Rad über eine Rollfläche rollt. Zum Abbremsen des Fahrzeugs wird das Rad dabei zeitweise mit einem Bremsmoment beaufschlagt, welches entgegen einer Drehrichtung des Rades wirkt.

Unter einem Fahrzeug wird im Zusammenhang mit der Erfindung insbesondere ein Kraftwagen, ein Schienenfahrzeug oder ein Flugzeug verstanden. Durch die Erfindung wird für ein solches Fahrzeug ein Antiblockiersystem für wenigstens eines von dessen Rädern bereitgestellt.

Rollt ein Fahrzeug, also beispielsweise ein Kraftwagen, über eine Rollfläche einer Fahrbahn, so kann über ein Rad des Fahrzeugs eine parallel zu der Rollfläche wirkende Kraft höchstens so groß sein, wie die zwischen einer Lauffläche eines Reifens des Rades und der Rollfläche der Fahrbahn wirkende Haftreibung. Diese parallel zur Rollfläche übertragbare Kraft teilt sich dabei auf in die Antriebs- bzw. Bremskraft einerseits und die Seitenführungskraft andererseits.

Wird das Fahrzeug derart stark gebremst, dass die höchstens auf die Rollfläche übertragbare Bremskraft überschritten wird, so blockiert das Rad und gleitet oder rutscht über die Rollfläche. Um wieder eine Haftung zwischen der Lauffläche des Reifens und der Rollfläche der Fahrbahn zu erhalten, muss die Lauffläche des Reifens wieder soweit beschleunigt werden, dass ihre Relativgeschwindigkeit zur Rollfläche klein genug ist, um die Haftung wieder zu ermöglichen. Hierzu kann bei einem Fahrzeug mit hydraulischer Reibbremse vorgesehen sein, diese mit Hilfe eines Antiblockersystems zeitweise zu lösen. Dieses greift dazu in den hydraulischen Bremskreis über Magnetventile ein. Um die Notwendigkeit eines Eingreifens zu erkennen, wird die Raddrehzahl des Rades gemessen. Sobald die Drehzahl des Rades im Vergleich zur Fahrgeschwindigkeit zu stark absinkt, wird die Reibbremse gelöst, so dass sie kein Bremsmoment mehr auf das Rad ausübt. Das über die Rollfläche gleitende Rad wird daraufhin durch die zwischen dem Rad und der Fahrbahn wirkenden Reibkraft wieder ins Rollen gebracht und beschleunigt. Wenn die Drehzahl des Rades wieder der Drehzahl der übrigen Räder entspricht, kann das Rad mittels der Reibbremse wieder mit einem Bremsmoment beaufschlagt werden. ,

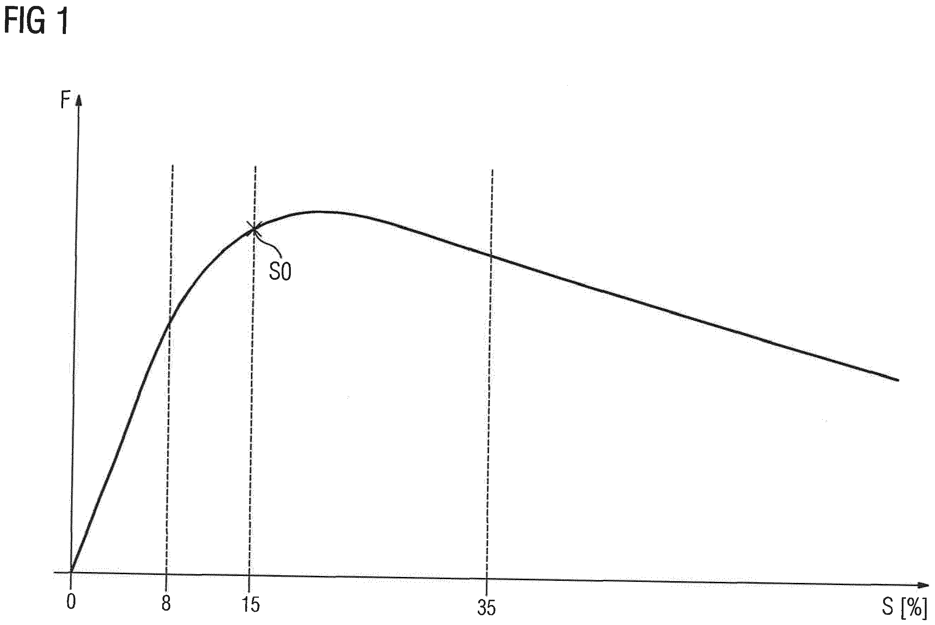

Ein Antiblockiersystem (ABS) greift in der Regel nicht erst bei Blockieren eines Rades ein. Vielmehr wird bereits bei einem noch rollenden Rad dessen Schlupf bezüglich der Fahrbahn geregelt. Dies wird im folgenden anhand von FIG 1 näher erläutert. Die bei einem geradeaus rollenden Fahrzeug über ein Rad desselben wirkende Bremskraft F nimmt, ausgehend von einem frei rollenden Rad mit einem Schlupf S=0% beim Abbremsen des Fahrzeugs (und in vergleichbarer Weise auch beim Beschleunigen desselben) mit steigendem Schlupf S zunächst bis zu einem Maximalwert zu, um dann ungefähr ab einem Schlupfwert von S=30% wieder geringer zu werden. Um beim Abbremsen des Fahrzeugs einen möglichst günstigen Schlupf zu erhalten, wird die Drehgeschwindigkeit des Rades durch das ABS abwechselnd aktiv über einen Bremseingiff vermindert und passiv bei gelöster Bremse über die Fahrbahn wieder beschleunigt. Hierdurch wird der Schlupf innerhalb eines Bereichs von z.B. S=8% bis S=35% geregelt. Während der ABS-Regelung pendelt der Drehgeschwindigkeit des Rades dabei zwischen entsprechend Drehzahlwerten.

Aus der DE 44 35 953 A1 ist bekannt, zum Abbremsen eines Personenkraftwagens ein Gesamtbremsmoment zu erzeugen, welches sich aus dem Bremsmoment eines hydraulischen Bremssystems einerseits und dem Bremsmoment eines im regenerativen Bereich betriebenen Elektromotors zusammensetzt.

Es ist Aufgabe der vorliegenden Erfindung, ein Antiblockiersystem für ein Fahrzeug zu verbessern.

Die Aufgabe wird durch das Verfahren gemäß Anspruch 1 sowie durch das Fahrzeug gemäß Anspruch 9 gelöst. Vorteilhafte Weiterbildungen des Verfahrens und des Fahrzeugs sind durch die Unteransprüche gegeben.

Bei dem erfindungsgemäßen Verfahren wird zum Verringern der Fahrgeschwindigkeit, welche das Fahrzeugs bezüglich einer Rollfläche aufweist, ebenfalls zeitweise wenigstens eine Rad des Fahrzeugs mit einem Bremsmoment beaufschlagt, welches entgegen einer Drehrichtung des Rades wirkt. Zusätzlich ist vorgesehen, während des Verringerns der Fahrgeschwindigkeit das Rad zeitweise mittels einer fahrzeugeigenen Beschleunigungseinrichtung mit einem Beschleunigungsmoment zu beaufschlagen, welches in die Drehrichtung wirkt. Bei dem Fahrzeug handelt es sich dabei insbesondere um einen Personen- oder Lastkraftwagen.

Durch das erfindungsgemäße Verfahren ergibt sich der Vorteil, dass man nun nicht mehr darauf angewiesen ist, dass das Rad allein durch die von der Fahrbahn auf das Rad wirkende Reibkraft beschleunigt wird, wenn sein Schlupf zu groß ist. Wird das Rad zu stark abgebremst oder verändert sich eine Oberflächeneigenschaft der Rollfläche entlang des Bremswegs und ergibt sich hierdurch eine verringerte Haftreibung, so wird auch während des Abbremsens durch die Beschleunigungseinrichtung der Schlupf des Rades aktiv angepasst.

Das erfindungsgemäße Fahrzeug kann in vorteilhafter Weise gemäß dem erfindungsgemäßen Verfahren abgebremst werden. Dazu weist das erfindungsgemäße Fahrzeug zum Einen eine Bremseinrichtung zum Abbremsen des Fahrzeugs auf. Dies Bremseinrichtung ist dazu ausgelegt, wenigstens ein Rad des Fahrzeugs mit einem Bremsmoment zu beaufschlagen. Zum Anderen ist eine Beschleunigungseinrichtung vorgesehen, welche dazu ausgelegt ist, das Rad mit einem Beschleunigungsmoment zu beaufschlagen. Durch eine Steuervorrichtung des erfindungsgemäßen Fahrzeugs kann dieses mittels der Bremseinrichtung und der Beschleunigungseinrichtung gemäß einer Ausführungsform des erfindungsgemäßen Verfahrens abgebremst werden.

Bei dem Bremsmoment und den Beschleunigungsmoment handelt es sich hierbei jeweils um ein resultierendes, insgesamt auf das Rad wirkendes Moment. Um zwischen einem Bremsmoment und einem Beschleunigungsmoment wechseln zu können, ist beispielsweise denkbar, dass mittels einer Brennkraftmaschine des Fahrzeugs das Rad mit einem Antriebsmoment beaufschlagt wird und zugleich mittels einer Reibbremse ein dem Antriebsmoment entgegenwirkendes Reibmoment. Durch Austarieren dieser beiden Momente kann dann als resultierendes Moment entweder ein Brems- oder ein Beschleunigungsmoment erzeugt werden.

Bevorzugt ist allerdings vorgesehen, dass die Beschleunigungseinrichtung wenigstens eine elektrische Maschine umfasst. Mit dieser lässt sich innerhalb einer besonders kurzen Zeitdauer ein Beschleunigungsmoment bereitstellen. Bei der elektrischen Maschine handelt es sich gemäß einer besonders bevorzugten Ausführungsform des erfindungsgemäßen Fahrzeugs um einen Radnabenmotor oder Radnabenantrieb des Rades. Dieser ermöglicht eine spielfreie Ankopplung an das Rad, so dass sich durch einen häufigen Wechsel zwischen einem Brems- einem Beschleunigungsmoment ein verhältnismäßig geringer Verschleiß der Anordnung ergibt.

In Bezug auf das Beschleunigungsmoment sieht eine Ausführungsform des erfindungsgemäßen Verfahrens vor, durch mittels des Beschleunigungsmoments einem Betrag eines Schlupfes, welchen das Rad bezüglich der Rollfläche aufweist, zu verringern. Mit anderen Worten wird ein zu langsames oder blockiertes Rad wieder in einen Bereich eines günstigeren Schlupfes gebracht, ohne dabei das Fahrzeug insgesamt zu beschleunigen, d.h. die Fahrgeschwindigkeit zu vergrößern. Es wird nur solange beschleunigt, bis ein gewünschter kleinerer Schlupfwert erreicht ist.

Gemäß einer anderen Ausführungsform des erfindungsgemäßen Verfahrens wird bei Erkennen einer Kurvenfahrt des Fahrzeugs mittels des Beschleunigungsmoments ein Betrag einer zwischen dem Rad und der Rollfläche wirkenden Seitenführungskraft vergrößert. Hierdurch kann in vorteilhafter Weise ein Ausbrechen des Fahrzeugs verhindert werden. Das Einstellen einer gewünschten Seitenführungskraft kann z. B. gemäß den durch den Kamm'schen Reibkreis beschriebenen Zusammenhängen erfolgen.

Die Bremseinrichtung des erfindungsgemäßen Fahrzeugs umfasst bei einer Ausführungsform desselben eine Reibbremse. Mit einer solchen kann eine besonders hohe Bremsleistung bereitgestellt werden. Gemäß einer Weiterbildung des erfindungsgemäßen Verfahrens ist dabei vorgesehen, das zu wenigstens einem Zeitpunkt nur ein Teil des Betrages des Bremsmoments mittels einer Reibbremse erzeugt wird. Hierdurch ergibt sich der Vorteil, dass das Einstellen des endgültigen Bremsmoments mittels einer genauer und schneller regelbaren Einrichtung, zum Beispiel einer elektrischen Maschine, eingestellt werden kann. Diese muss dabei dann nicht die volle Bremsleistung aufbringen können, wodurch sich die Herstellungskosten der genauer und schneller regelbaren Einrichtung gering gehalten lassen.

Zusätzlich oder alternativ zu einer Reibbremse kann bei dem erfindungsgemäßen Fahrzeug vorgesehen sein, dass die Bremseinrichtung wenigstens eine elektrische Maschine umfasst. Wie bereits erwähnt, ist mit einer solchen eine genauere und schnellere Einstellung des Bremsmoments möglich. Zusätzlich ist ein rekuperativer Bremsbetrieb möglich, in welchem kinetische Energie des Fahrzeugs in nutzbare elektrische Energie umgewandelt wird.

Gemäß einer Weiterbildung des erfindungsgemäßen Verfahrens wird zwischen dem Beaufschlagen des Rades mit dem Bremsmoment und dem Beaufschlagen des Rades mit dem Antriebsmoment auf der Grundlage einer Regelung gewechselt. Hierdurch lässt sich das Rad genauer in einem gewünschten, optimalen Schlupfpunkt halten. Als besonders vorteilhaft hat sich hierbei eine PID-Regelung erwiesen. Mit einer solchen lässt sich der Schlupf, insbesondere im Zusammenhang mit einer elektrischen Maschine als Beschleunigungseinrichtung, während der Dauer des Bremsvorgangs ohne signifikante Abweichung auf einen einzelnen optimalen Sollwert einstellen.

Bei einer Ausführungsform des erfindungsgemäßen Fahrzeugs weist die Steuereinrichtung zwei Regelkreise auf, von denen einer einen äußeren und einer einen inneren Regelkreis zum Einstellen des auf das Rad wirkenden resultierenden Moments bildet. Durch diese Ausführungsform ist es möglich, ein herkömmliches ABS mit einem Regelverfahren zu kombinieren, welches eine Ausführungsform des erfindungsgemäßen Verfahrens darstellt. Wird als Beschleunigungseinrichtung eine elektrische Maschine verwendet, so kann ein (verhältnismäßig langsamer) Regelkreis des herkömmliche ABS den äußeren Regelkreis und ein (im Vergleich schnellerer) Regelkreis für die elektrische Maschine den inneren Regelkreis bilden. Hierdurch lässt sich ein nachrüstbares Bremssystem bereitstellen.

Um eine Drehzahl des Rades genau bestimmen zu können, sieht eine Weiterbildung des erfindungsgemäßen Fahrzeugs eine Drehzahlmesseinrichtung vor, die dazu ausgelegt eine Drehzahl des Rades auf der Grundlage eines Signals eines Resolvers einer elektrischen Maschine zu ermitteln.

Die Erfindung wird im Folgenden anhand von Ausführungsbeispielen näher erläutert. Dazu zeigt:
- FIG 1: ein Diagramm mit einem Graphen, durch welchen ein prinzipieller Zusammenhang zwischen einem Schlupf eines Rades und einer auf das Rad wirkenden Bremskraft veranschaulicht ist, und
- FIG 2: eine schematische Darstellung eines Rades eines Personenkraftwagens, welcher eine Ausführungsform des erfindungsgemäßen Fahrzeugs darstellt.

Die Beispiele stellen bevorzugte Ausführungsformen der Erfindung dar.

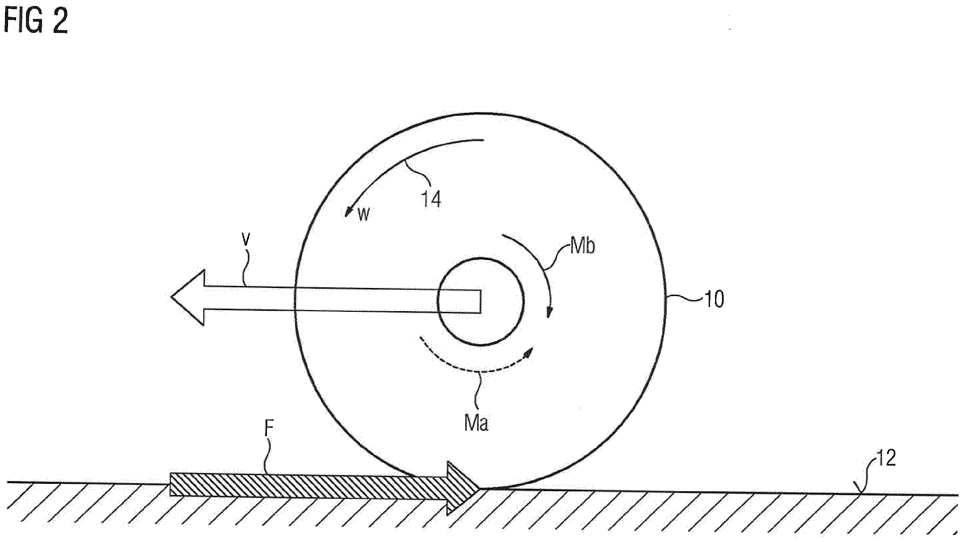

In FIG 2 ist ein Rad 10 gezeigt welches über eine Straße 12 rollt. Das Rad 10 gehört zu einem (nicht weiterer dargestellten) Personenkraftwagen, der sich mit einer Fahrgeschwindigkeit v entlang der Straße 12 bewegt. Das Rad ist mit einem (nicht dargestellt) elektrischen Radnabenantrieb gekoppelt, welcher eine elektrische Maschine, zum Beispiel eine Synchronmaschine oder eine Asynchronmaschine, aufweist. Mittels des Radnabenantriebs lässt sich der Personenkraftwagen sowohl beschleunigen als auch abbremsen.

Für die folgenden Erläuterungen sei angenommen, dass ein Fahrer des Personenkraftwagens gerade eine Vollbremsung ausführt. Der Personenkraftwagen rolle dabei gerade aus.

In Antwort auf eine Betätigung eines Bremspedals des Personenkraftwagens erzeugt der Radnabenantrieb ein Bremsmoment Mb, welches welches entgegen einer Rotationsrichtung 14 des Rades 10 auf dieses wirkt. Zum Erzeugen des Bremsmoments Mb werden durch ein Steuergerät des Radnabenantriebs Steuersignale an Leistungsschalter eines Wechselrichters der elektrischen Maschine übertragen, durch welche daraufhin Wicklungsströme in einem Stator der elektrischen Maschine derart eingestellt werden, dass ein magnetisches Drehfeld in der elektrischen Maschine das Bremsmoment Mb auf einen Rotor der elektrischen Maschine ausübt, welche mit dem Rad 10 mechanisch gekoppelt ist. Aufgrund des auf das Rad wirkenden Bremsmoments Mb verringert sich eine Rotationsgeschwindigkeit w des Rades 10. Dies vergrößert einen Schlupf S (siehe FIG 1) des Rades 10 bezüglich der Straße 12, und es wirkt eine Bremskraft F von der Straße 12 auf das Rad 10. Hierdurch wird schließlich die Fahrgeschwindigkeit v des Personenkraftwagens verringert.

Der Radnabenantrieb stellt einen hoch dynamisch steuerbaren Antrieb dar. Durch das Steuergerät des Radnabenantriebs wird der Schlupf S des Rades 10 auf einen Sollwert S0=15% eingestellt. Dieser Sollwert S0 stellt einen optimalen Wert dar, bei welchem sich die Bremskraft F einen Maximalwert aufweist, wenn noch eine kleine vorbestimmte Kraftreserve für einen Schlupf S>15% bereitgehalten werden soll. Das Rad 10 kann dabei im Falle einer zu starken Abbremsung (S>15%) oder eines Gleitens des Rades 10 über der Straße 12 aktiv mittels Elektromotors auch während des Bremsens beschleunigt werden, um den Schlupf S wieder auf den Sollwert SO einzustellen. Hierzu wird in diesem Beispiel das Drehfeld der elektrischen Maschine durch entsprechendes Ansteuern der Leistungsschalter einfach innerhalb von weniger als 5 ms derart umgestellt, dass die elektrische Maschine auf das Rad 10 ein Beschleunigungsmoment Ma ausübt, welches in die Rotationsrichtung 14 wirkt. So wird wieder die Rotationsgeschwindigkeit w des Rades 10 auf einen optimalen Wert eingestellt, bei welchem sich der Sollwert S0 für den Schlupf ergibt. Damit ergibt sich ein Zeitvorteil im Verhältnis zu einem herkömmlichen ABS, welches bei einer zu starken Abbremsung eines Rades auf eine passive Beschleunigung des Rades durch die zwischen der Fahrbahn und dem Rad wirkende Reibkraft angewiesen ist.

Zudem wird bei dem Personenkraftwagen des Beispiels eine fahrdynamische Stabilität des Fahrzeugs erhöht, da die Regelschleife der Steuereinheit mit dem direkten auf den Rotor wirkenden Eingriff schneller ist als eine Regelschleife eines ABS, über welche ein hydraulisches System einer Reibbremse gesteuert wird.

Elektrische Maschinen verfügen üblicherweise über einen Resolver, der die Drehzahl besser auflöst als ein Drehzahlsensor, wie er in einem herkömmlichen ABS verwendet wird. Aufgrund der mechanischen Kopplung zwischen der elektrischen Maschine und dem Rad kann ein solcher Resolver auch zum Bestimmen der Drehzahl des Rades verwendet werden. Es ist aber natürlich auch möglich, einen separaten Drehzahlsensor zum Messen der Drehzahl des Rades zu nutzen.

Wie in dem Beispiel gezeigt, kann beim Einsatz von elektrischen Maschinen auch das Abbremsen elektromotorisch erfolgen, also nicht über eine Reibbremse. In diesen Fall steuert ein Regelalgorithmus der Steuereinheit sowohl das Vermindern als auch das Beschleunigen des Rades. Dadurch kann ein Jitter, d.h. ein Pendeln um den optimalen Schlupfwert, reduziert werden. Das Rad wird im Bremskraftmaximum gehalten. Die Führungsgröße "Rotationsgeschwindigkeit w des Rades" kann besser geregelt werden. Während der Bremsung ist das Rad länger im optimalen Schlupfpunkt gegenüber einem herkömmlichen ABS.

Letzteres Prinzip kann auch in Kombination mit einer Reibbremse verwendet werden. Dazu wird nur ein Teil der Bremskraft an der Reibbremse eingestellt. Die Regelung erfolgt dann über das Steuern der elektromotorischen Bremse. Die Summe der Bremskraft aus Reibbremse und elektromotorischer Bremse ergibt hierbei die Bremskraft, die notwendig ist, um das Rad im Bremskraftmaximum zu halten.

Die Wiederbeschleunigungsphase eines blockierten oder im Vergleich zur Fahrzeuggeschwindigkeit zu langsamen Rades kann durch den aktiven Eingriff des elektrischen Antriebs verkürzt werden. Man ist nicht mehr auf die Eigenbeschleunigung des Rades, welche vom Reibwert des Untergrunds abhängt, angewiesen. So wird das Rad besser im Punkt des optimalen Schlupfes gehalten. Hierdurch kann der Bremsweg verkürzt, die Abnutzung des Reifens des Rades reduziert und die Stabilität erhöht werden.

Der externe Raddrehzahlsensor kann entfallen, wenn für die Gewinnung der Drehzahlinformation der Resolver-Sensor genutzt wird, der in der elektrischen Maschine vorhanden ist. Dies erspart die Kosten für den Raddrehzahlsensor, die Montage, die Verkabelung und die zugehörige Auswerteschaltung.

## Patentansprüche

1. Verfahren zum Abbremsen eines Fahrzeugs, welches mit wenigstens einem Rad (10) über eine Rollfläche (12) rollt, wobei bei dem Verfahren eine Fahrgeschwindigkeit (v) des Fahrzeugs bezüglich der Rollfläche (12) verringert wird und hierzu zeitweise das Rad (10) mit einem Bremsmoment (Mb) beaufschlagt wird, welches entgegen einer Drehrichtung (14) des Rades (10) wirkt,
**dadurch gekennzeichnet, dass** während des Verringerns der Fahrgeschwindigkeit (v) das Rad (10) zeitweise mittels einer Beschleunigungseinrichtung des Fahrzeugs mit einem Beschleunigungsmoment (Ma) beaufschlagt wird, welches in die Drehrichtung (14) wirkt.

2. Verfahren nach Anspruch 1,
**dadurch gekennzeichnet, dass** durch das Beschleunigungsmoment (Ma) ein Betrag eines Schlupfes (S), welchen das Rad (10) bezüglich der Rollfläche (12) aufweist, verringert wird.

3. Verfahren nach Anspruch 1 oder 2,
**dadurch gekennzeichnet, dass** zwischen dem Beaufschlagen des Rades (10) mit dem Bremsmoment (Mb) und dem Beaufschlagen des Rades (10) mit dem Antriebsmoment (Ma) auf der Grundlage einer Regelung gewechselt wird, insbesondere auf der Grundlage einer PID-Regelung.

4. Verfahren nach Anspruch 3,
**dadurch gekennzeichnet, dass** durch die Regelung ein Schlupf (S), welchen das Rad (10) bezüglich der Rollfläche (12) aufweist, auf einen vorbestimmten Sollwert (SO) geregelt wird.

5. Verfahren nach einem der vorhergehenden Ansprüche,
**dadurch gekennzeichnet, dass** eine Kurvenfahrt des Fahrzeugs erkannt wird und mittels des Beschleunigungsmoments (Ma) ein Betrag einer zwischen dem Rad (10) und der Rollfläche (12) wirkenden Seitenführungskraft vergrößert wird.

6. Verfahren nach einem der vorhergehenden Ansprüche,
**dadurch gekennzeichnet, dass** zu wenigstens einem Zeitpunkt zumindest ein Teil des Betrages des Bremsmoments (Mb) mittels einer Reibbremse erzeugt wird.

7. Verfahren nach einem der vorhergehenden Ansprüche,
**dadurch gekennzeichnet, dass** zu wenigstens einem Zeitpunkt zumindest ein Teil des Betrages des Bremsmoments (Mb) oder des Beschleunigungsmoments (Ma) mittels einer elektrischen Maschine erzeugt wird.

8. Verfahren nach einem der vorhergehenden Ansprüche,
**dadurch gekennzeichnet, dass** eine Drehzahlmessung des Rades (10) mittels eines Resolvers einer elektrischen Maschine durchgeführt wird.

9. Fahrzeug mit
einer Bremseinrichtung zum Abbremsen des Fahrzeugs, die dazu ausgelegt ist, wenigstens ein Rad (10) des Fahrzeugs mit einem Bremsmoment (Mb) zu beaufschlagen;
einer Beschleunigungseinrichtung, welche dazu ausgelegt ist, das Rad (10) mit einem Beschleunigungsmoment (Ma) zu beaufschlagen,
**gekennzeichnet durch** eine Steuereinrichtung, die dazu ausgelegt ist, das Fahrzeug mittels der Bremseinrichtung und der Beschleunigungseinrichtung gemäß einem Verfahren nach einem der vorhergehenden Ansprüche abzubremsen.

10. Fahrzeug nach Anspruch 9,
**dadurch gekennzeichnet, dass** die Beschleunigungseinrichtung wenigstens eine elektrische Maschine, insbesondere wenigstens einen elektrischen Radnabenantrieb, umfasst.

11. Fahrzeug nach Anspruch 9 oder 10,
**dadurch gekennzeichnet, dass** die Bremseinrichtung eine Reibbremse umfasst.

12. Fahrzeug nach einem der Ansprüche 9 bis 11,
**dadurch gekennzeichnet, dass** die Bremseinrichtung wenigstens eine elektrische Maschine, insbesondere wenigstens einen elektrischen Radnabenantrieb, umfasst.

13. Fahrzeug nach einem der Ansprüche 9 bis 12,
**dadurch gekennzeichnet, dass** die Steuereinrichtung zwei Regelkreise aufweist, von denen einer einen äußeren und einer einen inneren Regelkreis zum Einstellen des auf das wenigstens eine Rad (10) wirkenden Moments (Ma, Mb) bildet.

14. Fahrzeug nach einem der Ansprüche 9 bis 13,
**gekennzeichnet durch** eine Drehzahlmesseinrichtung, die dazu ausgelegt eine Drehzahl (w) des Rades (10), auf der Grundlage eines Signals eines Resolvers einer elektrischen Maschine zu ermitteln.
